# EUROPEAN PATENT APPLICATION

(11) **EP 2 506 162 A1**
(43) Date of publication of application: **03.10.2012**
(21) Application number: 11160594.5
(22) Date of filing: 31.03.2011
(51) Int. Cl.: G06F 17/30

(54) **Finding a data item of a plurality of data items stored in a digital data storage**

(71) Applicant: Itsystems AG, 4052 Basel (CH)
(72) Inventor: Püntener, Patrick, 4056, Basel (CH); Zogg, Dario, 4054, Basel (CH)
(74) Representative: Vossius & Partner

(57) **Abstract**

A computer implemented method for finding at least one data item of a plurality of data items (11) stored in a data storage, comprising the steps of creating metadata for the at least one data item, linking the metadata to the at least one data item, indexing the metadata of the plurality of data items, obtaining a search term, searching the indexed metadata with regard to the search term, and providing data items of the plurality of data items being linked to retrieved metadata retrieved by the searching of the indexed metadata. The method further comprises the steps of providing a metadata engine (1) for the creating of the metadata for the at least one data item and the linking of the metadata to the at least one data item, which comprises a connector framework having at least one connector (2) being connectable to an external information system (9), extracts information from the at least one external information system (9) via the at least one connector, defines an abstraction layer based on an ontology representing the extracted information by topics and relations between the topics, and specifies the metadata with the topics associated to the at least one data item according to the abstraction layer.

## Description

### Technical Field

The present invention relates to a computer implemented method according to the preamble of independent claim 1 and more particularly to a computer program. Such computer implemented methods comprising the steps of creating metadata for at least one data item, linking the metadata to the at least one data item, indexing the metadata of a plurality of data items, obtaining a search term, searching the indexed metadata with regard to the search term, and providing data items of the plurality of data items being linked to retrieved metadata retrieved by the searching of the indexed metadata can be used for finding the at least one data item of the plurality of data items stored in a data storage.

### Background Art

Today various information technology systems generate huge amounts of digital data or data items for economic, research, personal or various other purposes. This generation is still growing due to increasing capacities of digital data storages, commonly available fast and widespread networks as well as high-performance computers. However, with said increasing capacity of data storages and said increasing generation of digital data, finding specific data items within a data storage gets increasingly difficult and increasingly demanding with regard to the capacities of computer systems. For example, access speed to data storages such as to hard disks, to flash memories or to compact disks, computational capacities, e.g., limited by processor performance or by volatile memory access, or data transfer resources such as network traffic, bus performance or the like may limit the performance of finding data items in large data storages. Thus, searching for data items can be resource and time consuming to such an extent that computers or computer systems reach their limits of capacities while searching for a data item. As a consequence, finding data items often is inappropriately slow or other tasks performed by the computer system can be essentially impeded or even blocked.

To overcome these drawbacks, plural approaches exist to allow improved fast finding of data items by only requiring comparably few resources of the computer or computer system. One such approach tries to increase efficiency of finding data items be enhancing quality of searchable information about information items such as data items. For example, information management systems such as, e.g., enterprise content management (ECM) systems or the like often use metadata to describe unstructured information items such as, e.g., documents, web pages, tasks, contacts, general list items or the like according to well defined criteria. Metadata is typically managed in hierarchical taxonomies, usually in a separate database, and applied to the information items by a process commonly known as "tagging". Thereby, tagging is either performed manually by the user each time an information item is created or modified, or automatically based on content analysis which is also known as entity extraction or on location analysis which is also known as location-based tagging. Metadata is attached to the information item and often indexed together with the content of the information item. Indexed metadata can then be used in search queries to find information items more efficiently by searching by metadata terms rather than terms contained in the content of the data items.

However, such classical metadata is typically used to describe an information item in a rather static way such as by relating it to a set of business-relevant categories like customers, products, locations, projects etc. Furthermore, if a relation chain based search task would be needed in order to focus the finding of data items such that resources of the computer system can be saved and a manageable amount of search hits can result, usually classical metadata and information systems get to their limits. In particular, the necessary information for such search tasks usually is at least not sufficiently present in the metadata. For example, such a question for a relation chain based search could be "Find letter documents in the final project phase managed by user X where approval is missing" which involves information of various fields such as project management, user management, workflow management and the like. Allowing such relation chain based search tasks with the mentioned classical metadata would involve a cumbersome management of metadata causing a comparably large effort to ensure up-to-dateness and completeness of the metadata and to allow sophisticated searches. In other words, the effort to maintain a consistent metadata source over time can be too high and the classification quality too poor such that, in combination with the lack of a general easy to use data model comprising all relevant criteria to more efficiently process weakly structured information, relation chain based search tasks are generally not possible. Thus, the above mentioned restrictions in finding data items out of comparably large sets of data items usually is - at least to a certain extent - still present within today's data item finding technologies. Consequently, the finding of data items can still be essentially limited by the capacities of a computer system such that it can be inappropriately slow or hindering parallel tasks of the computer system.

Therefore, there is a need for a method or a system allowing to efficiently finding specific data items within a comparably large amount of data items stored in a data storage thereby preferably demanding comparably low capacities of an involved computer system.

### Disclosure of the Invention

According to the invention this need is settled by a method as it is defined by the features of independent claim 1, and by a computer program as it is defined by independent claim 15. Preferred embodiments are subject of the dependent claims.

In particular, the gist of the invention is the following: A computer implemented method for finding at least one data item of a plurality of data items stored in a data storage comprises the steps of creating metadata for the at least one data item, linking the metadata to the at least one data item, indexing the metadata of the plurality of data items, obtaining a search term, searching the indexed metadata with regard to the search term, and providing data items of the plurality of data items being linked to retrieved metadata retrieved by the searching of the indexed metadata. The method according to the invention further comprises providing a metadata engine for the creating of the metadata for the at least one data item and the linking of the metadata to the at least one data item. The metadata engine has a connector framework with at least one connector being connectable to an external information system. Via this at least one connector the metadata engine extracts information from the at least one external information system. Further, the metadata engine defines an abstraction layer based on an ontology representing the extracted information by topics and relations between the topics and specifies the metadata with the topics associated to the at least one data item according to the abstraction layer.

In the context of the invention, the term "data item" can relate to any kind of data or information being storable in a digital data storage or computer data storage. In particular, it can relate to files and folders of a file system, to web pages and web sites within an intranet or the World Wide Web, to database content or the like and to combinations thereof. The term "computer" as used herein can relate to any computer devices and in particular also to computer systems comprising a plurality of interconnected computer devices. The term "data storage" can relate to any physical and/or logical unit being arranged for storing data or data items such as physical data storages like hard disks, flash memories, random access memories (RAM), read only memories (ROM), compact discs or the like, or such as logical data storages like databases or database management systems, file systems or the like managing the storage of data on physical data storages. The metadata data engine can be a computer application implemented by computer code means or software executed on the computer. The at least one connector of the connector framework of the metadata engine can be any connector or interface unit suitable for establishing a connection to the external system such as, e.g., a LDAP-connector, a ODBC-connector, a XML-connector for web services of the external system, a specific connector for any external information system, a customized connector or the like.

Indexing in this context can relate to collecting, parsing and storing information to facilitate data retrieval wherein the purpose of an index usually is to optimize speed and performance in finding relevant data items for a search query. Indexing algorithms and mechanisms are widely known in the art and can particularly be implemented as an indexing engine in an external information system. Searching with regard to the search term in this context can relate to any suitable computer search applying an appropriate algorithm. It can particularly be implemented by any search engine being widely known in the art and, e.g., being implemented in an external information system.

In the context of the invention, the term "ontology" can relate to computer ontology being a formal representation of knowledge as a set of concepts within a domain and the relationships between those concepts. Particularly, it can be a model that comprises of a set of types, properties and relationship types wherein it can have components such as instances or objects, classes, attributes, relations, functions, restrictions, rules, axioms, events or the like. For coding such computer ontologies, specific formal languages are known such as the common algebraic specification language (CASL), the common logic being defined in standard no. 24707 of the international organization for standardization (ISO), the CycL, the developing ontology-grounded methods and applications (DOGMA), the integrated definition for ontology description capture method (IDEF5), the knowledge interchange format (KIF), the rule interchange format (RIF) and the like. Also, ontology can correspond to taxonomy or to interlinked taxonomies wherein a taxonomy or taxonomic scheme can be a particular classification commonly arranged in a hierarchical structure. The abstraction layer can particularly be implemented as or can comprise a topic map wherein the topic map can represent information using the topics representing any conceptual entity such as people, countries or organizations, or software modules, individual files or events, in particular also abstract concepts such as process status or role, project phase, confidentiality classification or other abstract attributes, the relations or associations representing hypergraph relationships between the topics and values or occurrences representing information resources relevant to a particular topic. In particular, the topic map can be based on or derived from the standard no. 13250:2003 of the international organization for standardization (ISO).

External information system in this context relates to a system or application being external with regard to the metadata engine and can particularly be any suitable topic or metadata source application. It can particularly relate to any standard or third party computer application being executed on the computer or computer system. For example, the external information system can be a user profile system, a workflow system, an enterprise resource planning (ERP) system, an enterprise content management (ECM) system, a content management system (CMS), a customer relationship management (CRM) system, a classification system, a file management system, a document management system (DMS) or the like. Exemplary products of suitable such external systems are known in the art, e.g., labelled with the trademarks Microsoft SharePoint, Lotus Notes, Microsoft Exchange, SAP, PeopleSoft, Microsoft Navision, Microsoft Axapta, Microsoft CRM, EMC Documentum, Day Communiqué or OpenText Vignette. In a preferred embodiment of the invention the external information system relates to a plurality of external information systems such that the information can be combined from these plural external information systems into the metadata. Thereby, the connector framework of the metadata engine can particularly comprise a plurality of connectors allowing each of the plurality of external systems to be connected. Furthermore, the above mentioned data storage itself can also be the external system as mentioned or any one of the plurality of external information systems.

Thereby, regarding user profile systems, user profiles can be used to describe users of other information systems. Usually, user profiles are managed in a separate database and have a relation to a user account in a directory service. A user profile typically comprises information such as department, manager, position, function or role(s), location and other contact details of the user.

Further, regarding workflow systems or workflow engines being implemented in any external information system, they can be used to describe electronic processes and their instances or states. Thereby, a process can be defined by a flow of actions that can be divided in subsequent phases or sub-processes. For each action, one or several input items such as data items or information items, one or several output items such as data items or information items and one or several roles such as users involved in the action can be defined. Conditions can be defined to go from one action to the next action or actions can be defined to be run in parallel. Workflows are usually managed in a separate database or even in a separate external information system. Inputs and outputs either have to be stored in the workflow system or are related to the workflows via the workflow database.

Still further, regarding classification systems, they can be used to file information in a defined most often hierarchical structure. Compliance and governance information such as access permissions, confidentiality classification, archiving rules, retention periods or general information management policies can be related to the nodes of the filing structure and affects the information stored there. The classification system can be used to manage the information according to the rules and policies required by an organization or external entity such as local laws and governments.

Within the method according to the invention each topic can be connected to a distinct external information system or source application using a one-way synchronization from the source application to the abstraction layer or topic map, thus loosely coupling source and topic map. The abstraction layer or topic map stores keys from the source for each topic and each value or occurrence to enable feedback loops to the source. The connector framework can particularly support the following: Initially importing of topics, subtopics, values or occurrences, synonyms and alternative languages; initially setting of permissions on topics, subtopics and values or occurrences; initially importing preferably bi-directional relations between topics, subtopics and values or occurrences; initially defining executable code on topics, subtopics and values or occurrences; updating changes on topics, subtopics, values or occurrences, synonyms and alternative languages; generating a historiography of modified topics, subtopics, values or occurrences, synonyms and alternative languages; updating changes on permissions on topics, subtopics and values or occurrences; updating changes on preferably bi-directional relations between topics, subtopics and values or occurrences; and updating executable code on topics, subtopics and values or occurrences.

The method according to the invention allows, in addition to classical metadata that is used to describe an information item in a rather static way as described above, to apply additional and in particular dynamic criteria to get a more complete picture about the data item or the plurality of data items. E.g., these additional criteria can be categorised in information about the users related to the data items, information about the business processes related to the data items and information about governance rules related to the data items. To decide whether an information item is relevant with regard to a certain person, a certain stage in a process or a certain administrative aspect, these additional criteria can be helpful in order to allow for an efficient finding of the data item. Further, it can be made possible to increase the value of metadata of the data items by including information which is otherwise not present in the metadata, thereby allowing the data items to be found in accordance with additional search criteria and in particular by means of a sophisticated relation chain search task. This can allow the data item to be efficiently found in a wide range of different contexts.

In particular, the method according to the invention allows for automatically integrating information of at least one and preferably plural external information systems when tagging data items with metadata. Thereby, the external information systems can be based on various different technologies and the information to retrieve can be stored in various different formats. With the method, it is possible to automatically use external information systems which are based on different technologies and which store information in different formats. Thus, the method provides the possibility to combine the above mentioned criteria and to interact between the corresponding external information systems allowing integrating the information stored and managed in the external information systems for tagging the data items. Furthermore, it can be allowed to keep trace of the information of the external information system which is used to specify the metadata and thereby to keep the metadata up to date. The level of information quality within metadata tagging can be increased such that the computer or computer system can be able to automatically implement semantic or search based solutions since the meaning of the data item in a certain context and at a certain point in time can be made known to the computer system. In particular, it can be possible to send standard search queries provided by an external information system or information management platform to an index to find and retrieve previously tagged data items and structural elements.

Also, compatibility of the technologies in use of the external information systems can be provided with the method according to the invention allowing for implementing relation chains across technology breaches. In other words, the method allows to fully describe a weakly structured data item, e.g. including taxonomy information, user information, process information and governance information in metadata, make the full classification or metadata available in an index, e.g., of a standard information management platform, display data items related to specific topics, users and their attributes such as user roles, processes and their attributes such as process phase and governance rules, and to support weakly structured processes electronically, making process instances comparable and measurable. Specifically, the inventive method makes it possible to tag otherwise disconnected information such as user information such as, e.g., a user's role, function, location, language etc., process information such as, e.g., the current status, phase, step, role involved in the step, inputs and outputs etc. and governance information such as, e.g., confidentiality, permissions, archiving rules etc. directly to the data item by transforming this information into metadata, thus making it indexable and opening the way to find and retrieve data items based on the complete range of criteria through sophisticated and simple search queries.

In consequence of the above, improved finding of data items, e.g., by means of a relation chain based search task, can be automatically implemented with the method according to the invention such that efficient, fast and resource saving finding of the data item is possible.

Preferably, the metadata engine comprises at least one ontology definition rule and the abstraction layer is defined based on the ontology representing the extracted information by the topics and the relations between the topics by means of the at least one ontology definition rule, wherein the at least one ontology definition rule is arranged to implement at least one step of the group of steps consisting of: defining a hierarchical structure of the topics; defining values for the topics; defining synonyms for the topics; defining synonyms for the values; defining translations for the topics; defining translations for the values; defining relations preferably bi-directional relations between the topics; defining relations preferably bi-directional relations between the values; defining computer code associated to one of the topics; defining computer code associated to one of the values; defining keys of topics; defining keys of values; defining history values for topics; defining history values for values; defining permission settings on the topics; and defining permission settings on the values. Defining as used herein can relate to any process involving a definition step such as initially creating, changing, updating, refreshing or the like. Further, as used herein the terms "value" and "occurrence" are used interchangeably and can particularly relate to occurrences of topic maps. In preferred embodiments, the at least one ontology definition rule is arranged to implement a plurality of steps of the group of steps mentioned hereinbefore and in particular at least three steps, at least four steps, at least five steps, at least six steps, at least seven steps, at least eight steps, at least nine steps, at least ten steps or all steps thereof. By means of such ontology definition rules, the abstraction layer can be automatically defined, maintained and customized in a convenient and sophisticated manner by the information of the at least one external information system via the at least one connector. In particular, it can be allowed to efficiently combine information coming from plural external information systems. Thus, improved finding of data items at a comparably high performance and at a comparably low resources demand is possible.

For example, by providing ontology definition rules for defining a hierarchical structure of the topics, the topics can automatically be organized wherein the rules can be set up and maintained according to the at least on external information systems and according to the context of the abstraction layer. Or, by providing ontology definition rules for defining values or occurrences for the topics, the values can be set taking into account the structure and content of the at least one external information system. Or, by providing ontology definition rules for defining synonyms for the topics and/or the values, the metadata can be flexible in terms of finding of data items can even be possible without searching with the exact terminology. Or, by providing ontology definition rules for defining translations for the topics and/or the values, finding data items in plural languages or in a combination of plural languages is possible. Or, by providing ontology definition rules for defining relations preferably bi-directional relations between the topics and/or between the values, finding data items via interlinked topics and/or values is possible. Or, by providing ontology definition rules for defining computer code associated to one of the topics and/or to one of the values, allows to execute functions in the connection with the topics and/or values. In particular, additional information such as values or topics can dynamically be gathered or created by means of the computer code or updates can be performed or the like. Or, by providing ontology definition rules for defining keys of topics and/or of values, e.g. as a separate field in the metadata, it can made possible to identify the topics and/or values. Furthermore, the keys can be keys of the at least one external information system allowing to keep the topics, values and metadata in connection with the information retrieved from the at least one external information system. Or, by providing ontology definition rules for defining history values for topics and/or for values, finding data items by using amended metadata in search terms can be allowed. Or, by providing ontology definition rules for defining permission settings on the topics and/or on the values, it can be possible to restrict access to data items, to find data items with regard to such restrictions or to restrict the linking of specific topics to specific data items. In this context, permission settings can be related to user-, group- or role related permissions. Preferably, a time interval is predefined in the connection framework of the metadata engine and the metadata engine repeatedly extracts the information from the at least one external information system via the at least one connector in accordance with the time interval wherein the metadata engine updates the topics and the relations between the topics and specifies the metadata with the updated topics associated to the at least one data item when a change in the extracted information is detected. Alternatively or additionally, the metadata engine extracts the information from the at least one external information system via the at least one connector when an event defined in the at least one external information system associated to the extracted information is triggered by a change of information in the external information system wherein the metadata engine updates topics and relations between topics and specifies the metadata with the updated topics associated to the at least one data item when the event is triggered. With such a repeated or triggered information extraction it is possible to automatically keep the abstraction layer and the metadata up to date. In particular, it allows to maintain the information in the external system and in the meantime to update the metadata as soon as the information changes in the external information system. Thus, up-to-dateness of the metadata can be established allowing for improved finding of data items at a comparably high performance and at a comparably low resources demand. Thereby, the metadata engine can specify previous metadata when specifying the metadata with the updated topics. In this context, previous metadata relates to the metadata before being updated. For example, the previous metadata can be linked to the at least one data item together with the updated metadata therefore also being indexed in parallel with the updated metadata. Like this, it is possible to efficiently find data items having changing metadata over time. For example, it is possible to find a document previously being associated to another organisational structure than the current organisational structure the document is associated to.

Preferably, the metadata engine comprises at least one tagging rule and the metadata is specified with the topics associated to the at least one data item according to the abstraction layer by means of the at least one tagging rule, wherein the at least one tagging rule is arranged to implement at least one step of the group of steps consisting of: (i) inheriting a superordinate topic from a first hierarchical level to a second hierarchical level subordinated to the first hierarchical level wherein the metadata engine specifies the metadata additionally with the superordinate topic when specifying the metadata with topics of the second hierarchical level; (ii) defining a group of plural topics wherein the metadata engine specifies the metadata additionally with the other topics of the group when specifying the metadata with one topic of the group; (iii) defining a search for information related to at least one of the topics wherein the metadata engine retrieves the information and specifies the metadata additionally with the retrieved information when specifying the metadata with the at least one of the topics; (iv) manually inputting values for the topics of the at least one data item wherein the metadata engine comprises at least one form rule, manually inputting values comprises providing a user interface having a plurality of input fields and specifying the metadata comprises transforming the information of the input fields according to the form rule; (v) extracting a content keyword from the at least one data item by analysing the content of the at least one data item; (vi) extracting a location keyword from the at least one data item by analysing the location of the at least one data item; (vii) defining a matching rule wherein the metadata engine matches at least one reference value with at least one of the topics or at least one generic attribute and specifies the metadata additionally depending on the result of the matching rule (true or false); and (viii) defining a timer job associated to at least one topic of the topics or to at least one tagging rule wherein the metadata engine repeatedly updates the at least one topic according to the timer job or executes the at least one tagging rule. By means of such tagging rules, the metadata can efficiently be linked to the data item and the information within the metadata of data item can be improved. Thus, improved finding of data items at a comparably high performance and at a comparably low resources demand is possible.

For example, by providing tagging rules for inheriting topics information, the metadata of the data item can be enriched by information within the metadata of superordinate topics preferably in a cumulative way. E.g., if a high level container or superordinate topic is tagged with "customer A" and the low level container or subordinate topic with "product B", then a data item in the high level container can be tagged with "customer A" and a data item in the low level container with "customer A" as well as "product B". Thus, the data item or a set of data items is efficiently findable also by searching for terms of superordinate topics. Or, by providing tagging rules for defining a group of plural topics, it is possible to combine topics. Such possible combinations can particularly also be combinations in-between various taxonomy items, various user information items, process information items or governance information items. For example, a possible combination can be a user information item being related to another user information item such as, e.g., user X being related to location Y. As another example, a possible combination can be a user information item being related to process information item such as, e.g., customer X being related to project Y. As still another example, if a data item is tagged with "project 1" and "project 1" has a 1:1 relation with "customer A", then the data item is also tagged with "customer A". Or, by providing tagging rules for defining a search for information related to at least one of the topics, the metadata can be amended by any searchable information with regard to the topics wherein this information can be gathered from any possible source. The search can also be reused repetitively in conjunction with a timer job as described above. Or, by providing tagging rules for defining a matching rule, a value such as a user property of the current user or a process attribute or status of the current process or a classification attribute of the current classification rule can be compared to a reference value and the metadata can be defined or amended with regard to the result of the matching rule. Or, by providing tagging rules for defining a timer job associated to at least one topic of the topics it is possible to provide for an automatic update of the metadata such that the metadata can efficiently be kept up to date even if their underlying information is amended in the external information system. Thereby, the at least one topic can also be a search result such as described hereinbefore. Or, by providing tagging rules for defining a timer job associated to at least one tagging rule it is possible to apply the at least one tagging rule repetitively.

Manually inputting a keyword as described hereinbefore can also be referred to by manual tagging. Extracting content keywords as described hereinbefore can also be referred to by entity extraction. Extracting location keywords as described hereinbefore can also be referred to by location based tagging. By applying such procedures within the method, either of the known tagging techniques manual tagging, entity extraction and location based tagging can be combined with the tagging via the abstraction layer as described above. Thus, the level of information quality can be additionally increased. In other words, such a method allows to combine the inventive metadata tagging with known metadata tagging independent of the at least one external information system. Like this, the inventive metadata tagging and its benefits can be conveniently combined with known metadata tagging and its benefits. Thus, an improved finding of data items at a comparably high performance and at a comparably low resources demand is possible. Also, an additional combination with tagging techniques implemented in external systems, i.e. a combination with retrieved metadata, is possible. Thereby, the further metadata can be added to the retrieved metadata or it can be used to complement or amend the retrieved metadata.

In this context of the form rule and the provision of an according user interface as described hereinabove, a form can be used to create the graphical user interface (GUI) and can comprise components and controls. The components and controls can comprise various input fields such as buttons, text boxes, check boxes, radio buttons, tree views, dropdowns and the like. Also, metadata or values can be represented in a clickable image and selected by a user to tag data items. For example, cities are represented in a country map and if a user clicks on a city in the map, the corresponding data item is tagged with the name of this city. The metadata engine can comprise means for predefining the form rule(s) such that they are user configurable. Like this, the manual tagging can conveniently be validated and completed as well as inputted information can be processed and interlinked. Thus, the manual tagging can conveniently be complemented with additional information allowing to improve the creating of metadata.

Further, the different steps of the group of steps described hereinbefore can be classified in context-related tagging steps comprising, e.g., the steps (i) and (ii) described hereinbefore, content-related tagging steps comprising, e.g., the steps (iii), (iv) and (v) described hereinbefore and state-related tagging steps comprising, e.g., the steps (vi), (vii) and (viii) described hereinbefore. In a preferred embodiment, the at least one tagging rule is arranged to implement one ore more steps per such class of steps. Like this, the at least one tagging rule can be suitable for metadata of different fields of information which allows combining the different fields of information usually being technically independent from each other into the metadata. In a particularly preferred embodiment, the at least one tagging rule is arranged to implement all steps (i) ― (viii) described hereinbefore which can allow for a flexibility of advantageous extent.

Preferably, the metadata engine retrieves metadata for the data item from the at least one external information system via the at least one connector and specifies the metadata with the retrieved metadata in addition to the topics associated to the at least one data item according to the abstraction layer. By retrieving metadata from the external information system already created by the external information system in addition to other information necessary for defining the abstraction layer, known tagging techniques of external information systems can be combined with the tagging via the abstraction layer. Thus, the level of information quality can be additionally increased particularly when a plurality of external information systems is connected to the metadata engine. Also, any kind of metadata store that is compatible with the external information system can be used, e.g. in combination with the metadata engine. In other words, such a method allows combining the inventive metadata tagging with known metadata tagging being implemented in the external information system. For example, such known metadata tagging can be content extraction or entity extraction, location-based tagging or manual tagging being implemented in the at least one external information system. Furthermore, the metadata tagging of the external information system can be used within the method without implementing it in the metadata engine itself. Like this, the inventive metadata tagging and its benefits can be conveniently combined with known metadata tagging and its benefits. Thus, an improved finding of data items at a comparably high performance and at a comparably low resources demand is possible.

Preferably, specifying the metadata with the topics within the metadata engine comprises providing the specified metadata in a predefined format. Predefined format in this context can particularly be a format compatible with a metadata store of an external information system such that this metadata store can be fed with the metadata specified by the metadata engine. Like this, e.g., it is possible to make use of the indexing and searching functionalities of an external information system thereby allowing to efficiently and conveniently implementing the method according to the invention.

Preferably, the metadata engine links the metadata to the at least one data item by calculating a hash value for the metadata to be linked and associating the hash value to the at least one data item. The hash values can be combined with other keys. In this context the term "hash value" relates to a value returned by a hash function which is a well-defined procedure or mathematical function that converts a large, possibly variable-sized amount of data into a comparably small datum, usually a single integer that may serve as an index to an array. Hash functions or algorithms known in the art and commonly used comprise, e.g., a checksum algorithm developed by Mark Adler in 1995 and called Adler-32, the cyclic redundancy check (CRC), the cryptographic hash function called HAVAL, the cryptographic hash function message digest algorithm 2, 3 or 5 (MD2, MD4 or MD5), the 128-bit, 160-bit, 256-bit and 320-bit versions of the cryptographic hash function integrity primitives evaluation message digest (RIPEMD-128, RIPEMD-160, RIPEMD-256 and RIPEMD-320) or the cryptographic hash functions secure hash algorithm (SHA-1, SHA-2, SHA-224, SHA-256, SHA-384, SHA-512) designed by the United States national security agency (NSA). Hash values are also known as hash codes, hash sums, checksums or hashes. Such hash values allow for uniquely identify a data item such that by associating the hash value to the metadata allows for efficiently retrieving data items related to relevant metadata.

Preferably, the metadata engine generates at least one virtual data item representing one of the topics and specifies metadata for the at least one virtual data item with the topics associated to the at least one virtual data item according to the abstraction layer. Such a method allows for indexing, searching and finding any information item as virtual data item even if the information item otherwise would not be in an indexable format (e.g. a physical or an abstract item). For example, this makes it possible to represent an abstract concept such as a project, specify metadata for the abstract concept and provide a link to the information item in the index for improving finding the data item in a certain context. Thus, the data item can be efficiently found.

Particularly in this manner, the method can implement a procedure to transform any process notation into the abstraction layer or topic map representation of the distinct process elements of a process portfolio of interlinked processes. The procedure can involve the following steps: (a) identifying the process portfolio to be represented in the abstraction layer or topic map; (b) identifying and creating a list of the processes in the process portfolio wherein dimensions such as role, time, input, output or code as well as other dimensions can be created in the list; (c) identifying and creating a list of roles involved in the process portfolio; (d) identifying and creating a list of content types involved in the process portfolio; (e) identifying and creating a list of systems involved in the process portfolio; (f) identifying sub-processes (recursive) for each process wherein in the process list for each process a new hierarchical level per recursion is created and the sub-processes are listed; (g) identifying the process steps for each sub-process wherein in the process list for each sub-process a new hierarchical level is created and the steps are listed; (h) for each step a relation for each involved role in the "role" dimension is created, a relation for each involved input content or system in the "input" dimension is created, a relation for each involved output content or system in the "output" dimension is created, any chronological information such as, e.g. duration or deadline is entered into the "time" dimension, the code to be executed upon execution of the step is entered into the "code" dimension, a relation for each involved additional process element is created in additional dimensions if required; (i) repeating step (h) on sub-process level and/or process level if required; (j) creating the topics process, role, input, output, time and an additional topic for each additional dimension if required in the abstraction layer or topic map; (k) connecting the topics to the process list using the connector framework; (I) importing the process list including the relations into the abstraction layer or topic map and synchronizing standard process notation with the abstraction layer or topic map; (m) upon execution of the process creating a virtual data item representing each instance of the defined process; (n) specifying metadata for the virtual data item representing the process instances and amending it throughout the process; and (o) indexing the virtual data items representing the process instances. Preferably, the obtaining a search term comprises providing a search interface wherein the metadata engine generates the search term by means of the search interface and provides the search term to a search service for the searching of the indexed metadata with regard to the search term. Search interface in this context can relate to a user interface such as a graphical user interface, an application interface or any other interface suitable requesting or querying the data item. The search service can be a component of the external information system. If a plurality of external information systems is connected to the metadata engine via the connector framework, the search service can particularly be a component of any one of the external information systems. By using such a search service state of the art searching functionalities can conveniently be integrated into the method or system according to the invention. Furthermore, the search interface allows to automatically and efficiently providing the search term in accordance with prerequisites of the search service. Thereby, the search interface preferably is a user interface providing information of the metadata which is selectable by a user. The user interface can particularly be generated by the metadata engine. Further, it can be a graphical user interface such as window or form. The information about the metadata can be gathered, e.g., by the metadata engine as in a metadata store or in the index. Like this it is possible to provide only information which is in fact within the metadata to the user for selection. Thus, it can be prevented that the user searches for information not being part of the metadata such that an efficient finding of the data item is possible.

Thereby, the information of the metadata preferably is filtered when being provided in the user interface. Particularly, such filtering can include user data such as role, location and the like in order to present only selectable information to the user which is of importance to him. Like this, the data item can advantageously be found in an efficient manner. Thus, to retrieve the desired content or data item(s) in a specific context, the method according to the invention can implement filtering to filter the search result provided or returned by an index. Particularly, if a comparably high amount of data items being linked to the retrieved metadata is provided such filtering can allow for quickly and efficiently identifying and finding specific data items. Alternatively or additionally, the metadata engine preferably predefines at least one reference item by selecting any one of the topics or of the plurality of data items and matches the information of the metadata of the data item against the reference item. Matching the retrieved metadata against the reference item in this context can relate to verifying the presence of the metadata in both the retrieved data item as well as in the reference item. Also, it can relate to the presence of the reference item itself in the metadata of the retrieved data item. In other words, the metadata on each data item of the search result returned by the index or on each retrieved data item can be matched against the metadata of the reference item wherein a match can be defined as the metadata being present on both the search result data item and the reference item, meaning that the search result item will be displayed. Reference items can be any topics such as other data items, user profiles, processes or governance rules. Like this, the data item can advantageously be found in an efficient manner.

Preferably, the metadata engine comprises at least one data provider being connectable to a further external information system via the at least one connector and provides the data items of the plurality of data items being linked to the retrieved metadata retrieved by the searching of the indexed metadata by retrieving further information related to the specified metadata from the further external information system via the at least one data provider and displaying the retrieved further information. Also, the displayed information can be filtered or matched as explained above. Witch such data providers it is possible to gather additional information from any external information system in order to describe the provided data items. Thus, by means of providing such additional information a quick and efficient finding of one or more specific data items is possible.

Further, providing the data items of the plurality of data items being linked to the retrieved metadata can comprise defining a data grid in which each data item of the provided data items represents a row and each metadata category represents a column. This allows for a convenient display of the provided data items. Thereby, providing the data items of the plurality of data items being linked to the retrieved metadata can comprise defining a view covering a section of the data grid and displaying the view. The view can particularly be displayed in a user interface such as a graphical user interface (GUI). Thereby, defining the view can comprise filtering the provided data items with regard to the metadata categories or use metadata matching with regard to a reference item as described above.

Also, such a method can implement a number of configurable modular display tools capable of displaying information provided by the search or any other data provider and filtered using metadata filtering or metadata matching. The display tool configuration can be independent of the query language used in the search query, hence a number of different pluggable data providers can be supported and the configuration can be reused when the data provider is changed at a later stage. The display process can run through several steps: (a) consuming the search result from the selected data provider; (b) filtering the search result by applying a combination of a number of metadata filters and/or content filters and/or metadata matching (c) defining a data grid with rows and columns where each row represents an information item from the search result and each column represents a metadata category; (d) defining an unlimited number of user selectable views displaying a selection of the data grid by applying additional metadata filters and/or content filters and/or metadata matching on the rows of the data grid and selecting a number of columns of the data grid; (e) defining a user interface to display the content for the defined views; and (f) displaying the content of a view in the user interface.

Another aspect of the present invention relates to a computer program comprising code means being arranged to implement the metadata engine described above of the method according to the invention as well as preferred embodiments thereof when being executed. Such a computer program allows for efficiently and conveniently implementing and distributing the method according to the invention. A further other aspect of the present disclosure relates to an apparatus or computer system being arranged to execute the computer program according to the invention mentioned above. With such a computer system an efficient and convenient implementation of the method according to the invention is possible as well as preferred embodiments thereof.

These and other aspects of the invention will be apparent from and elucidated with reference to the embodiment(s) described hereinafter.

### Brief Description of the Drawings

The method and the computer program according to the invention are described in more detail herein below by way of an exemplary embodiment and with reference to the attached drawings, in which:
- Fig. 1: shows a schematic block diagram illustrating a metadata engine of an embodiment of the invention; and
- Fig. 2: shows a schematic block diagram illustrating a process of the embodiment of the invention from Fig. 1.

### Mode(s) for Carrying Out the Invention

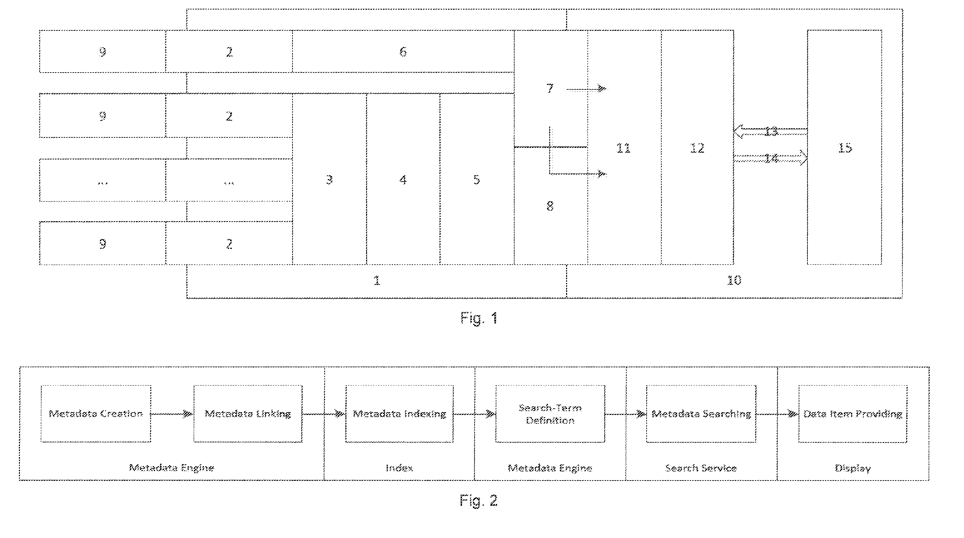

ln Fig. 1 a system or computer implementation of an embodiment of the invention by means of a computer program being executed on a computer is shown. The system comprises a metadata engine 1 and a data storage 10 which is a component of a Microsoft SharePoint server application as an external information system. The metadata engine 1 has a connector framework with a plurality of connectors 2. Each of the connectors 2 is arranged to establish a connection to one of a plurality of external information systems 9. The external information systems 9 are any of user profile systems, workflow systems, enterprise resource planning (ERP) systems, enterprise content management (ECM) systems, content management systems (CMS), customer relationship management (CRM) systems, classification systems, file management systems, document management systems (DMS) or the like. It can be particularly advantageous to connect all of the business relevant such systems or as many of such systems managing business or data item relevant information as possible.

The metadata engine 1 of the system comprises an ontology definition unit 3 having a plurality of ontology definition rules. Each of the ontology definition rules is arranged to define a topic map as an ontology based on information extracted from one of the external information systems 9 and its corresponding structure in order to establish an abstraction layer 4. For that purpose the ontology definition unit 3 is connected to the plurality of external information systems 9 via the connectors 2 of the connection framework. The ontology definition rules are arranged to perform the definition of the ontology suitable to the accessible external information systems 9. In particular, they are arranged to define a hierarchical structure of the topics within the topic map; values for the topics; synonyms for the topics; synonyms for the values; translations for the topics; translations for the values; relations between the topics; relations between the values; computer code associated to one of the topics; computer code associated to one of the values; keys of topics; keys of values; history values for topics; history values for values; permission settings on the topics; and permission settings on the values.

For example, in a project management solution scenario, connectors 2 could be configured to extract information about the user such as the user's department, roles, function, position and the like from a user profile system such as Microsoft Active Directory, information about the project process such as inputs and outputs, steps, phases, roles, deadlines, deliverables and the like from a workflow system such as Microsoft SharePoint Workflow Foundation, information about projects and products such as product groups, project managers, project status, budget and the like from an ERP system such as SAP, and information about customers such as verticals, geographical locations, account managers and the like from a CRM system such as Microsoft CRM. The ontology definition unit 3 could then implement the abstraction layer 4 using existing relations present in the external information systems 9 such as relations between projects and customers, customers and geographical locations, customers and account managers, projects and project managers, process phase and corresponding output/deliverables/deadlines and the like, and using existing hierarchies such as hierarchical representation of geographical locations or an the user's position in an organisation and the like, thus defining an abstraction layer 4 containing all relations and hierarchies that exist in the various external information systems 9.

The metadata engine has a tagging unit 5 interacting with the abstraction layer 4 and comprising a plurality of tagging rules. Each of the tagging rules is arranged to specify metadata using the topics of the topic map each of which being associated to one or plural of data items 11 stored in the data storage 10. The tagging rules are arranged to perform the specification of the metadata in accordance with the topic map which in turn is suitable for representing the information accessible in the external information systems 9. In particular, they are arranged to inherit a superordinate topic from a first hierarchical level of the topic map to a second hierarchical level subordinated to the first hierarchical level wherein the tagging unit 5 of the metadata engine 1 specifies the metadata additionally with the superordinate topic when specifying the metadata with topics of the second hierarchical level; to define a group of plural topics of the topic map wherein the tagging unit 5 of the metadata engine 1 specifies the metadata additionally with the other topics of the group when specifying the metadata with one topic of the group; to define a search for information related to at least one of the topics wherein the tagging unit 5 of the metadata engine 1 retrieves the information and specifies the metadata additionally with the retrieved information when specifying the metadata with the topics; to manually input values for the topics of the data items 11 wherein the metadata engine comprises form rules, manually inputting values comprises providing a user interface having a plurality of input fields and specifying the metadata comprises transforming the information of the input fields according to the form rules; to extract a content keyword from the data items 11 by analysing their content; to extract location keywords from the data items by analysing their locations; to define a matching rule wherein the tagging unit 5 of the metadata engine 1 matches a reference value with a topic or a generic attribute and specifies the metadata additionally depending on the result of the matching rule; and to define timer jobs associated to the topics and/or to the tagging rules wherein the tagging unit 5 of the metadata engine 1 repeatedly updates the at topics according to the timer jobs or executes the associated tagging rules.

For example, in the above mentioned project management solution scenario, the tagging unit 5 could be used to define a forms-based user interface to create new project workspaces represented by Microsoft SharePoint sites, by which the user can specify the project specific tags such as the project name, duration, project number and the like. In addition, a group of plural topics can be defined for the project using the existing relations in the topic map. For example, using project relations from the ERP, additional tags regarding the project manager, budget, related customer, confidentiality level and the like could be defined automatically for the project. Or, using customer relations from the CRM, additional tags regarding geographical locations, vertical, account managers and the like could be defined automatically for the project. In addition, the tagging unit 5 could be used to automatically inherit the project specific tags to all data items 11 such as documents, tasks, contacts, issues and the like. In addition, the tagging unit 5 could be used to automatically create relations between a user, the project workspace, and the users's role in the project process as defined in the forms-based user interface when creating the project workspace. In addition, the tagging unit 5 could be used to assign permissions to access the project workspace to the user in function of his or her role in the project, by executing a computer code associated to the specific role tag. In addition, the tagging unit 5 could be used to define additional tags for data items 11 by using process information contained in the topic map and for example tag data items with the current process phase when they are created, thus creating a process-related time stamp that can be used to measure the integrity of the process. In addition, the tagging unit 5 could be used to define additional tags for data items 11 by reading information out of a document template such as the document type (e.g. concept, budget, schedule and the like) and define a document type tag for all documents based on the template.

The metadata engine 1 further comprises a hash value generator 7 and a virtual data item generator 8. The hash value generator 7 calculates a hash value in accordance with a predefined algorithm for each single of the specified metadata. The calculated hash values are associated to the data items 11 and accessible to a Microsoft SharePoint index service as an index of a metadata store. The virtual data generator 8 generates virtual data items 11 representing specific topics of the topic map. Of this virtual data item metadata is specified in the same manner as explained above in the context of non-virtual data items 11. Also for the metadata of the virtual data items the hash value generator 7 calculates hash values as explained above. Additionally, the metadata engine has a retrieval unit 6 by which metadata are directly extracted from one or more external systems 9. This retrieved metadata is then further processed as described above in connection with the specified metadata.

For example, the virtual data item generator 8 could be used to generate a virtual data item of each project workspace created in the above mentioned project management solution scenario, thus making it possible to index the project workspace itself and treat it like any other data item, which otherwise would not be possible in Microsoft SharePoint since it is only possible to index content but not structural elements. Or, the virtual data item generator 8 could be used to generate a virtual data item of each customer related to a project, thus making it possible to index customer information associated to a customer object, which otherwise would not be possible in Microsoft SharePoint since the customer in this scenario is only used in the metadata of another object, but not in the content. Or, the retrieval unit 6 could be used to retrieve additional metadat from the ERP, such as current time bookings to a project, thus making this additional information available through the SharePoint index.

The system further comprises a Microsoft SharePoint search service 12 as search query and a Microsoft SharePoint web part 15 as data item display within the Microsoft SharePoint server 10 as a search component for searching the indexed metadata. By means of this search component, the indexed metadata can conveniently be searched as indicated by arrow 13 and the associated data items or virtual data items can be provided as indicated by arrow 14.

For example, the search service 12 could be used to aggregate process information regarding the above mentioned project management solution scenario, and create a personalized view by filtering the search result using metadata filtering or metadata matching. Thus, all activities that currently have to be performed by a specific person, can be aggregated using a search query. Or, the search service 12 could be used to find all documents that have not been created in the correct project phase by comparing the process definition such as defined in the abstraction layer (i.e. the relation between project phase and deliverable) with the tags on the document. Or, the search service 12 could be used to find all projects that are in a bad condition where a specific person is the project manager. Or, the search service 12 could be used to find all persons in an organisation or a part of an organisation that have access to project documents of a certain type (e.g. concepts, budgets, schedules and the like) or of a certain confidentiality level (e.g. secret documents) or a combination of both.

Fig. 2 schematically shows the process of finding data items in accordance with the method or system of the invention. As can be seen from left to right in Fig. 2, within the metadata engine metadata are created either by specifying via the topic map as explained above or by direct extraction from an external information system already providing said metadata. Also within the metadata engine, the metadata are linked or tagged to the according data items or virtual data items. The metadata are stored and indexed in the index. Within the metadata engine a search term is defined on the basis of a search interface's information and this search term is provided to the search service. The search service then performs metadata searching within the index and provides associated data items to a display on which the data items are displayed for a user.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below.

The invention also covers all further features shown in the Figs. individually although they may not have been described in the afore or following description. Also, single alternatives of the embodiments described in the figures and the description and single alternatives of features thereof can be disclaimed from the subject-matter of the invention.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Any reference signs in the claims should not be construed as limiting the scope.

## Claims

1. Computer implemented method for finding at least one data item of a plurality of data items (11) stored in a data storage, comprising the steps of:
creating metadata for the at least one data item;
linking the metadata to the at least one data item;
indexing the metadata of the plurality of data items;
obtaining a search term;
searching the indexed metadata with regard to the search term; and
providing data items of the plurality of data items being linked to retrieved metadata retrieved by the searching of the indexed metadata,
**characterized by**
providing a metadata engine (1) for the creating of the metadata for the at least one data item and the linking of the metadata to the at least one data item, which
comprises a connector framework having at least one connector (2) being connectable to an external information system (9);
extracts information from the at least one external information system (9) via the at least one connector;
defines an abstraction layer based on an ontology representing the extracted information by topics and relations between the topics; and
specifies the metadata with the topics associated to the at least one data item according to the abstraction layer.

2. Method according to claim 1, wherein the metadata engine (1) comprises at least one ontology definition rule and the abstraction layer is defined based on the ontology representing the extracted information by the topics and the relations between the topics by means of the at least one ontology definition rule, wherein the at least one ontology definition rule is arranged to implement at least one step of the group of steps consisting of:
defining a hierarchical structure of the topics;
defining values for the topics;
defining synonyms for the topics;
defining synonyms for the values;
defining translations for the topics;
defining translations for the values;
defining relations between the topics;
defining relations between the values;
defining computer code associated to one of the topics;
defining computer code associated to one of the values;
defining keys of topics;
defining keys of values;
defining history values for topics;
defining history values for values;
defining permission settings on the topics; and
defining permission settings on the values.

3. Method according to claim 1 or 2, wherein a time interval is predefined in the connection framework of the metadata engine (1) and the metadata engine (1) repeatedly extracts the information from the at least one external information system (9) via the at least one connector (2) in accordance with the time interval wherein the metadata engine updates the topics and the relations between the topics and specifies the metadata with the updated topics associated to the at least one data item when a change in the extracted information is detected.

4. Method according to any one of the preceding claims, wherein the metadata engine (1) extracts the information from the at least one external information system (9) via the at least one connector (2) when an event defined in the at least one external information system (9) associated to the extracted information is triggered by a change of information in the external information system wherein the metadata engine (1) updates topics and relations between topics and specifies the metadata with the updated topics associated to the at least one data item when the event is triggered.

5. Method according to any one of the preceding claims, wherein the metadata engine (1) comprises at least one tagging rule and the metadata is specified with the topics associated to the at least one data item according to the abstraction layer by means of the at least one tagging rule, wherein the at least one tagging rule is arranged to implement at least one step of the group of steps consisting of:
inheriting a superordinate topic from a first hierarchical level to a second hierarchical level subordinated to the first hierarchical level wherein the metadata engine (1) specifies the metadata additionally with the superordinate topic when specifying the metadata with topics of the second hierarchical level;
defining a group of plural topics wherein the metadata engine (1) specifies the metadata additionally with the other topics of the group when specifying the metadata with one topic of the group;
defining a search for information related to at least one of the topics wherein the metadata engine (1) retrieves the information and specifies the metadata additionally with the retrieved information when specifying the metadata with the at least one of the topics;
manually inputting values for the topics of the at least one data item wherein the metadata engine (1) comprises at least one form rule, manually inputting values comprises providing a user interface having a plurality of input fields and specifying the metadata comprises transforming the information of the input fields according to the form rule;
extracting a content keyword from the at least one data item by analysing the content of the at least one data item;
extracting a location keyword from the at least one data item by analysing the location of the at least one data item;
defining a matching rule wherein the metadata engine (1) matches at least one reference value with at least one of the topics or at least one generic attribute and specifies the metadata additionally depending on the result of the matching rule; and
defining a timer job associated to at least one topic of the topics or to at least one tagging rule wherein the metadata engine (1) repeatedly updates the at least one topic according to the timer job or executes the at least one tagging rule.

6. Method according to any one of the preceding claims, wherein the metadata engine (1)
retrieves metadata for the data item from the at least one external information system (9) via the at least one connector (2) and
specifies the metadata with the retrieved metadata in addition to the topics associated to the at least one data item according to the abstraction layer.

7. Method according to any one of the preceding claims, wherein specifying the metadata with the topics within the metadata engine (1) comprises providing the specified metadata in a predefined format.

8. Method according to any one of the preceding claims, wherein the metadata engine (1) links the metadata to the at least one data item by calculating a hash value for the metadata to be linked and associating the hash value to the at least one data item.

9. Method according to any one of the preceding claims, wherein the metadata engine (1) generates at least one virtual data item representing one of the topics and specifies metadata for the at least one virtual data item with the topics associated to the at least one virtual data item according to the abstraction layer.

10. Method according to any one of the preceding claims, wherein the obtaining a search term comprises providing a search interface and wherein the metadata engine (1) generates the search term by means of the search interface and provides the search term to a search service for the searching of the indexed metadata with regard to the search term.

11. Method according to claim 10, wherein the search interface is a user interface providing information of the metadata which is selectable by a user.

12. Method according to claim 11, wherein the information of the metadata is filtered when being provided in the user interface.

13. Method according to claim 11 or 12, wherein the metadata engine (1) predefines at least one reference item by selecting any one of the topics or of the plurality of data items and matches the information of the metadata of the data item against the reference item.

14. Method according to any one of the preceding claims, wherein the metadata engine (1)
comprises at least one data provider being connectable to a further external information system (9) via the at least one connector (2) and
provides the data items of the plurality of data items being linked to the retrieved metadata retrieved by the searching of the indexed metadata by
retrieving further information related to the specified metadata from the further external information system (9) via the at least one data provider and
displaying the retrieved further information.

15. Computer program comprising code means being arranged to implement the metadata engine (1) of the method according to any one of the preceding claims when being executed.
